# FASCICULE DE BREVET EUROPEEN

(11) **EP 2 486 247 B1**
(45) Date de publication et mention de la délivrance du brevet: **16.09.2015**
(21) Numéro de dépôt: 10771798.5
(22) Date de dépôt: 27.09.2010
(51) Int. Cl.: F01D 25/16, F16C 27/04, F16C 19/54

(54) **DISPOSITIF DE CENTRAGE ET DE GUIDAGE EN ROTATION D'UN ARBRE DE TURBOMACHINE**
VORRICHTUNG ZUR ZENTRIERUNG UND FÜHRUNG DER ROTATION EINER TURBOMASCHINENACHSE
DEVICE FOR CENTRING AND GUIDING THE ROTATION OF A TURBOMACHINE SHAFT

(30) Priorité: 08.10.2009 FR 0904816
(43) Date de publication de la demande: 15.08.2012
(73) Titulaire: Snecma, 75015 Paris (FR)
(72) Inventeur: ROUESNE, Ivan, Guy, F-77550 Moissy Cramayel Cedex (FR)
(74) Mandataire: Desaix, Anne
(86) Numéro de dépôt international: PCT/FR2010/052025
(87) Numéro de publication internationale: WO 2011/042638

(56) Documents cités:
- EP-A2- 1 008 726
- EP-A2- 1 548 238
- DE-A1- 10 258 528

## Description

La présente invention concerne un dispositif de centrage et de guidage en rotation d'un arbre, en particulier de turbomachine.

De façon générale, un arbre de turbomachine est centré et guidé en rotation par deux moyens de support, amont et aval respectivement, l'un de ces moyens de support pouvant comprendre deux paliers à roulements montés l'un à côte de l'autre.

Lorsqu'un palier de guidage d'arbre comprend un seul roulement, ce palier de guidage est couramment appelé « simplex » dans la technique et le roulement est par exemple à rouleaux ou à billes et porté par un support annulaire rigide s'étendant autour de l'arbre.

Lorsqu'un palier de guidage comprend deux paliers à roulements, ce palier de guidage est couramment appelé « duplex » et comprend en général un palier ou roulement à rouleaux et un palier ou roulement à billes.

Le palier ou roulement à billes du duplex est porté par un support annulaire ayant une certaine souplesse de façon à ce qu'il se déforme en fonctionnement et autorise des décentrements du palier à billes en cas de balourd, permettant ainsi au palier ou roulement à rouleaux d'assurer la reprise des charges radiales.

Ce palier à rouleaux est porté par un support annulaire qui a également de préférence une certaine souplesse pour éviter des problèmes de dynamique. Toutefois, pour que le palier à rouleaux assure la reprise des charges radiales précitées, la souplesse du support de palier à billes doit être au moins trois fois supérieure à celles du support de palier à rouleaux.

Lorsque les supports de palier sont tous les deux souples, un amortisseur à compression de film d'huile est en général agencé autour du palier à rouleaux. Cet amortisseur comprend un espace annulaire rempli d'huile et qui est délimité par une partie du support de palier à rouleaux et par un élément annulaire rigide entourant cette partie, et qui est fermé axialement par des anneaux d'étanchéité libres en rotation dans des gorges annulaires de la partie du support et qui coopèrent à étanchéité avec une surface cylindrique interne de l'élément annulaire rigide.

Dans la technique actuelle, les supports du palier à rouleaux et du palier à billes sont disposés l'un derrière l'autre et fixés l'un à l'autre par des moyens du type vis-écrou. Un dispositif de ce type est relativement encombrant, en particulier en direction axiale, ce qui empêche son montage dans un moteur de petite taille (voir par exemple le document EP-A2-1 008 726).

De plus, pour présenter une souplesse, chaque support de palier comprend une partie annulaire élastiquement déformable. L'augmentation de la souplesse d'un support de palier peut notamment résulter de l'allongement de la partie annulaire déformable de ce support, ce qui entraîne toutefois une augmentation de l'encombrement axial du dispositif et peut diminuer la résistance mécanique de la partie déformable du support.

Par ailleurs, l'efficacité de l'amortisseur à compression de film d'huile est notamment fonction du rapport de la longueur de l'espace précité rempli d'huile sur son rayon. Plus ce rapport est important et plus l'amortissement est efficace. Autrement dit, il est préférable que cet espace ait une longueur importante et un rayon relativement faible pour augmenter l'efficacité de l'amortissement. L'allongement de cet espace entraîne toutefois également une augmentation de l'encombrement axial du dispositif.

L'invention a notamment pour but d'apporter une solution simple, efficace et économique au problème d'encombrement des dispositifs de centrage et de guidage de la technique antérieure.

Elle propose à cet effet un dispositif de centrage et de guidage en rotation d'un arbre de turbomachine, comprenant un palier à rouleaux destiné à être monté autour de l'arbre et porté par un premier support annulaire, un palier à billes destiné à être monté autour de l'arbre et porté par un second support annulaire, et un amortisseur à compression de film d'huile agencé autour du palier à rouleaux et comportant un espace annulaire rempli d'huile et délimité par un support annulaire rigide entourant une partie du support de palier à rouleaux, les supports de palier étant destinés à être fixés avec le support annulaire rigide de l'amortisseur sur un carter et comportant chacun une partie annulaire élastiquement déformable, caractérisé en ce que le support du palier à billes, le support annulaire de l'amortisseur et le palier à rouleaux sont empilés transversalement et s'étendent les uns autour des autres.

Le dispositif selon l'invention est relativement compact grâce à l'empilement transversal du support de palier à billes, du support annulaire de l'amortisseur et du palier à rouleaux. Ces pièces s'étendent les unes autour des autres, ce qui permet de limiter l'encombrement, en particulier axial, du dispositif qui peut être monté dans un moteur de petite taille. L'invention permet donc d'intégrer un « duplex » souple - souple (c'est-à-dire un dispositif comportant un palier à rouleaux et un palier à billes portés respectivement par deux supports relativement souples) dans un moteur de petite taille, ce qui n'était pas possible dans la technique antérieure.

L'invention permet en outre de faciliter la mise au point de la souplesse de chaque support, le support du palier à billes pouvant avoir une souplesse plus de trois fois supérieure à celle du support de palier à rouleaux tout en respectant les contraintes mécaniques acceptables par ces supports, ainsi que la mise au point du rapport entre la longueur et le rayon du film d'huile de l'amortisseur. Ce rapport est selon l'invention supérieur ou égal à 0,3-0,4 environ.

Le support annulaire rigide de l'amortisseur a de préférence une forme sensiblement en L et comprend une partie cylindrique entourant le support de palier à rouleaux, et une partie radiale de fixation au carter. La partie radiale de ce support peut être intercalée entre des brides annulaires de fixation des supports au carter.

La partie déformable de chaque support de palier peut comprendre des fentes traversantes régulièrement réparties autour de l'axe du support et délimitant entre elles des languettes ou colonnettes élastiquement déformables.

Les languettes ou colonnettes du support de palier à rouleaux ont avantageusement une forme sensiblement en C ou en épingle, de façon à limiter leur encombrement en direction axiale. Cette forme particulière des colonnettes autorise le montage du dispositif au voisinage du pignon conique d'un arbre de renvoi de la turbomachine.

Ces colonnettes en C sont destinées à se déformer essentiellement en direction radiale lors de la transmission des charges radiales reprises par le palier à rouleaux.

Les languettes ou colonnettes du support de palier à billes peuvent être sensiblement rectilignes et orientées longitudinalement. Ces languettes ou colonnettes sont agencées au moins en partie autour du support annulaire de l'amortisseur et leur longueur est déterminée de façon à optimiser la souplesse du support de palier à billes. L'allongement de ces languettes ou colonnettes est moins pénalisant du point de vue de l'encombrement axial du dispositif que dans la technique antérieure car une majeure partie de celles-ci s'étend autour du support annulaire de l'amortisseur.

Ces languettes ou colonnettes ont de préférence au moins une extrémité de plus grande largeur leur conférant une forme sensiblement en I ou en T. Les extrémités élargies des colonnettes sont plus rigides que le reste de ces colonnettes et résistent donc mieux aux sollicitations mécaniques auxquelles elles sont soumises en fonctionnement, limitant ainsi l'apparition de criques ou de fissures sur ces extrémités.

Selon une autre caractéristique de l'invention, le support annulaire rigide de l'amortisseur comprend des nervures longitudinales de renfort formées en saillie sur sa surface cylindrique externe et destinées, en position de montage, à être engagées dans les fentes précitées du support de palier à billes, de façon à optimiser l'empilement des différentes pièces.

Le support annulaire de l'amortisseur peut comprendre des moyens d'alimentation en huile de l'amortisseur, ces moyens comportant au moins un conduit formé par exemple dans une des nervures de renfort de ce support.

Le conduit d'alimentation peut être relié à un embout de raccordement à des moyens d'amenée d'huile, cet embout étant destiné, en position de montage, à être engagé dans une des fentes du support de palier à rouleaux.

Avantageusement, la partie du support de palier à rouleaux agencée entre l'amortisseur et le palier à rouleaux a en section une forme en I et comprend une paroi cylindrique interne formant la bague externe du palier à rouleaux et une paroi cylindrique externe sur la surface externe de laquelle sont formées des gorges annulaires de logement d'anneaux d'étanchéité de l'amortisseur. Cette forme particulière en I permet de rigidifier la partie du support entourant les rouleaux, ce qui limite les déformations de cette partie en fonctionnement et se traduit par une augmentation de la durée de vie du palier à rouleaux et une meilleure efficacité de l'amortisseur à compression de film d'huile. En effet, la rigidification de cette partie du support du palier à rouleaux empêche d'une part la mise en cône de cette partie se traduisant par une usure précoce et localisée des rouleaux, et d'autre part l'ovalisation du support annulaire de l'amortisseur entraînant un film d'huile d'épaisseur non uniforme autour du palier à rouleaux et donc un mauvais amortissement des vibrations auxquelles ce palier est soumis en fonctionnement.

Le support du palier à billes peut être formé d'une seule pièce avec la bague externe de ce palier.

La présente invention concerne également une turbomachine, telle qu'un turboréacteur ou un turbopropulseur d'avion, comprenant au moins un dispositif tel que décrit ci-dessus, les supports de palier et de l'amortisseur étant fixés à une bride annulaire d'un carter intermédiaire de la turbomachine, cette bride étant située dans un plan transversal passant sensiblement par l'amortisseur et le palier à rouleaux. La bride du carter intermédiaire peut être frettée sur les nervures longitudinales de renfort du support annulaire de l'amortisseur. Les charges radiales reprisent par le palier à rouleaux sont ainsi directement transmises au carter intermédiaire, ce qui permet de rallonger la durée de vie des pièces du dispositif.

L'invention sera mieux comprise et d'autres caractéristiques, détails et avantages de celle-ci apparaîtront plus clairement à la lecture de la description qui suite, faite à titre d'exemple non limitatif et en référence aux dessins annexés dans lesquels :
- la figure 1 est une demi-vue schématique en coupe axiale d'un dispositif selon la technique antérieure de centrage et de guidage en rotation d'un arbre de turbomachine ;
- la figure 2 est une demi-vue schématique en coupe axiale d'un dispositif selon l'invention de centrage et de guidage en rotation d'un arbre de turbomachine ;
- la figure 3 est une vue schématique partielle en perspective et en coupe axiale du dispositif de la figure 2, à plus grande échelle, et représente les premier et second supports de palier et le support annulaire de l'amortisseur à compression de film d'huile ;
- la figure 4 est une vue schématique en perspective du dispositif de la figure 2, vu de l'amont et de côté ;
- la figure 5 est une vue schématique partielle en perspective et en coupe axiale du dispositif de la figure 2, la coupe passant par les moyens d'alimentation en huile de l'amortisseur ;
- la figure 6 est une autre vue schématique en perspective du dispositif de la figure 2, vu de l'aval et de côté ;
- la figure 7 est une vue schématique en perspective du premier support de palier du dispositif de la figure 2;
- la figure 8 est une vue schématique en perspective du support annulaire de l'amortisseur du dispositif de la figure 2 ; et
- la figure 9 est une vue schématique en perspective du second support de palier du dispositif de la figure 2.

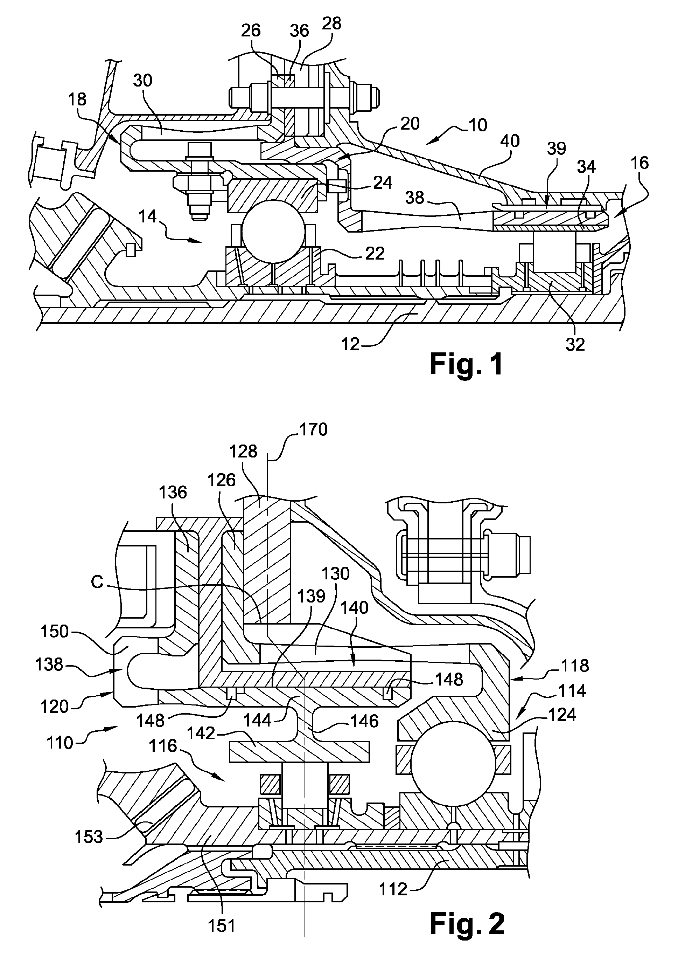

On se réfère d'abord à la figure 1 qui représente un dispositif 10 selon la technique antérieure de centrage et de guidage en rotation d'un arbre 12 de compresseur haute-pression de turbomachine, ce dispositif comprenant un palier à billes 14 et un palier à rouleaux 16 montés autour de l'arbre 12 et portés respectivement par deux supports annulaires 18, 20 relativement souples. Ce dispositif 10 est appelé « duplex » souple-souple dans la technique.

Le palier à billes 14 comprend une série de billes guidées dans un chemin de roulement défini par une bague interne 22 et une bague externe 24, la bague interne 22 étant fixée sur l'arbre 12 et la bague externe 24 étant fixée à une extrémité du support annulaire 18 dont l'autre extrémité comprend une bride annulaire 26 de fixation sur une bride annulaire 28 d'un carter intermédiaire de la turbomachine. Ce support 18 a en section une forme sensiblement en C et comprend une partie annulaire 30 élastiquement déformable conférant au support une certaine souplesse.

Le palier à rouleaux 16 est monté en aval du palier à billes 14 et comprend une série de rouleaux guidés dans un chemin de roulement défini par une bague interne 32 et une bague externe 34, la bague interne 32 étant fixée sur l'arbre 12 et la bague externe étant fixée à une extrémité aval du support annulaire 20 dont l'extrémité amont comprend une bride annulaire 36 de fixation sur la bride 28 du carter intermédiaire. Ce support 20 a une forme sensiblement cylindrique et comprend une partie annulaire 38 élastiquement déformable conférant au support une certaine souplesse. Une majeure partie du support 20 s'étend en aval du support 18.

Le dispositif 10 comprend en outre un amortisseur 39 à compression de film d'huile, qui comprend un espace annulaire rempli d'huile et délimité par la partie d'extrémité aval du support 20 et par la partie d'extrémité aval d'un support annulaire 40 rigide s'étendant autour du support 20 et fixé par son extrémité amont à la bride 28.

Ce dispositif 10 est relativement encombrant en direction axiale et il peut être difficile voire impossible de l'intégrer dans un moteur de taille réduite.

L'invention apporte une solution à ce problème grâce à l'empilement transversal du support de palier à billes, du support de l'amortisseur à compression de film d'huile et du palier à rouleaux, de façon à ce que ceux-ci s'étendent les uns autour des autres.

Dans l'exemple de réalisation de l'invention représenté aux figures 2 à 9, le dispositif 110 comprend un palier à rouleaux 116 monté en amont d'un palier à billes 114, le palier à rouleaux 116 étant monté autour de l'arbre 112 et porté par un support annulaire 120 qui est entouré par le support annulaire 140 rigide de l'amortisseur. Le palier à billes 114 est monté autour de l'arbre 112 et est porté par un support annulaire 118 entourant le support 140.

Le support 120 du palier à rouleaux 116 (figures 2 à 7) comprend une partie annulaire à section en I qui est reliée par une partie annulaire 138 élastiquement déformable à une bride annulaire de fixation 136 s'étendant radialement vers l'extérieur.

La partie en I du support 120 comprend deux parois cylindriques, respectivement interne 142 et externe 144, s'étendant l'une à l'intérieur de l'autre et reliées entre elles par une paroi annulaire radiale 146.

La paroi cylindrique interne 142 forme la bague externe du palier à rouleaux 116 dont la bague interne 132 est fixée sur l'arbre 112. La paroi externe 144 a une surface cylindrique externe délimitant intérieurement l'espace annulaire rempli d'huile de l'amortisseur 139 à compression de film d'huile.

Cet amortisseur 139 est fermé axialement à ses extrémités amont et aval par deux anneaux d'étanchéité 148 montés libres en rotation dans des gorges annulaires externes de la surface externe de la paroi 144.

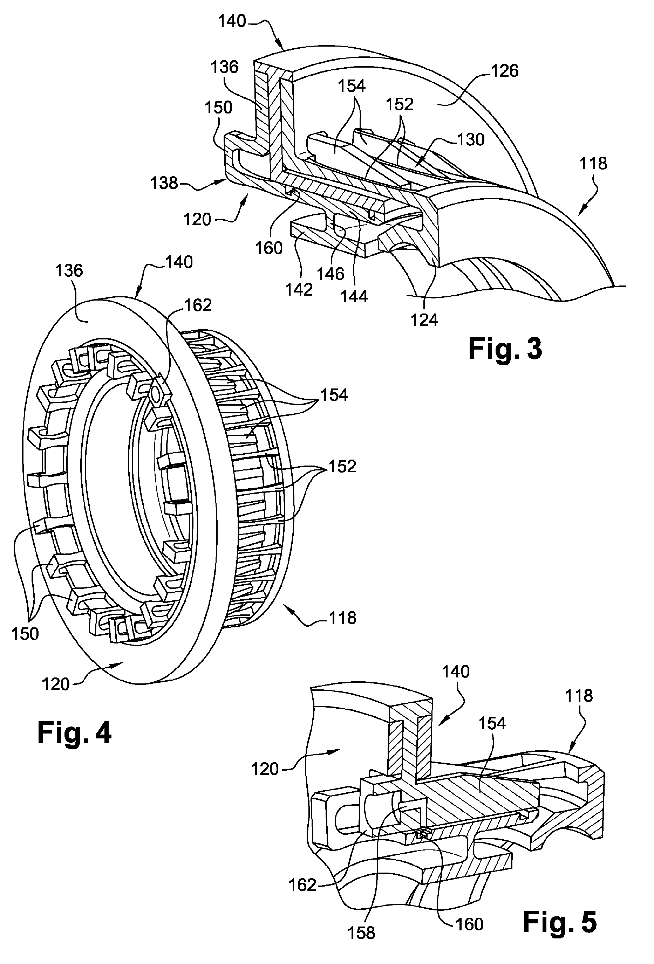

La partie 138 déformable du support 118, mieux visible aux figures 3 et 4, a en section une forme sensiblement en C ou en épingle et comprend une pluralité de fentes traversantes définissant entre elles des languettes ou colonnettes 150 en forme de C. Ces languettes ou colonnettes 150 sont régulièrement réparties autour de l'axe du support 118 et sont déformables, en particulier en direction radiale.

Cette forme en C des colonnettes 150 autorise le montage du dispositif autour d'un arbre de renvoi 151 monté sur l'arbre 112 et comportant à son extrémité amont un pignon conique 153. Les colonnettes 150 s'étendent ici autour et à distance de ce pignon 153.

Le support 118 du palier à billes 114 (figures 2 à 6 et 9) est formé d'une seule pièce avec la bague externe 124 de ce palier et comprend une partie annulaire déformable 130 reliée à son extrémité aval à cette bague 124 et à son extrémité amont à une bride annulaire 126 de fixation à la bride 136 de l'autre support 120.

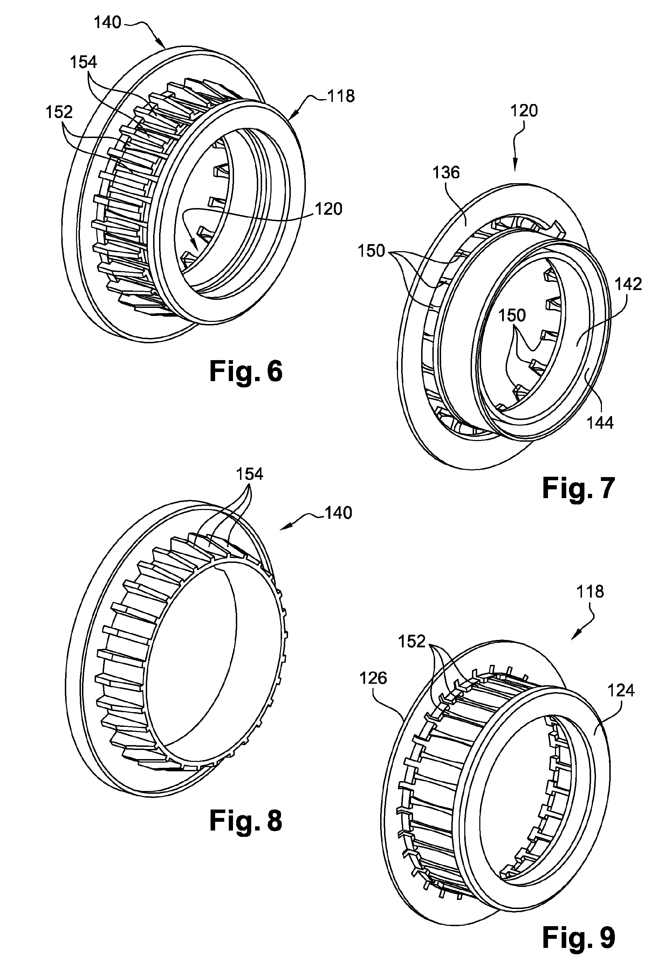

La partie déformable 130 du support 118, mieux visible aux figures 3 et 9, comprend plusieurs fentes traversantes définissant entre elles des languettes ou colonnettes 152 rectilignes et longitudinales, qui sont élastiquement déformables en direction axiale et/ou radiale. Ces languettes ou colonnettes 152 sont régulièrement réparties autour de l'axe longitudinal du support 118.

Les surfaces internes de la paroi 142 du support 120 et de la bague interne 124 du support 118 sont préférentiellement recouvertes d'une couche mince d'un matériau dur limitant l'usure de ces pièces par frottement des billes et des rouleaux des paliers.

Le support 140 (figures 2 à 6 et 8) a une forme en L et comprend une partie cylindrique reliée à son extrémité amont à une partie radiale s'étendant vers l'extérieur. La partie radiale du support 140 est intercalée entre les brides 136, 128 des supports de palier, l'ensemble de ces pièces étant appliquées et fixées par des moyens du type vis-écrou sur une bride annulaire 128 d'un carter intermédiaire.

La partie cylindrique du support 140 s'étend autour de la partie en I du support 120 et sa surface interne délimite extérieurement l'espace annulaire précité rempli d'huile de l'amortisseur 139. Les anneaux 148 coopèrent avec la surface cylindrique interne de cette partie cylindrique du support 140 pour assurer l'étanchéité de cet espace.

Des nervures longitudinales de renfort 154 sont formées en saillie, sur la surface externe de la partie cylindrique du support 140. Comme cela est visible aux figures 3 et 6, ces nervures sont destinées, en position de montage, à être engagées dans les fentes de la partie déformable 130 du support 118. Chaque nervure 154 du support 140 s'étend donc entre deux languettes ou colonnettes 152 adjacentes de ce support 118.

Le support 140 comprend des moyens d'alimentation en huile de l'amortisseur 139, ces moyens comprenant un conduit d'huile 158 qui est formé dans une des nervures 154 du support 140 et qui débouche à une première extrémité sur la surface interne de la partie cylindrique du support 140 (figure 5). La seconde extrémité du conduit 158 est reliée à un embout 162 de raccordement à des moyens d'amenée d'huile, cet embout 162 étant formé en saillie sur la face amont de la partie radiale du support 140 et s'étendant, en position de montage, entre deux colonnettes 150 adjacentes du support 120 (figures 4 et 5). Le conduit d'huile 158 a ici une forme sensiblement en L.

La surface externe de la paroi 144 du support 120 comprend, entre les anneaux d'étanchéité 148 précités, une gorge annulaire 160 de distribution de l'huile amenée par le conduit 158. Cette gorge 160 est située sensiblement au droit du conduit et permet de distribuer de manière uniforme l'huile sur tout le pourtour de l'amortisseur et ainsi de former un film d'huile d'épaisseur uniforme (figure 5). Le fonctionnement de ce type d'amortisseur est bien connu dans la technique et ne sera donc pas expliqué dans le détail ici.

En fonctionnement, la partie 130 du support 118 se déforme pour autoriser des décentrements du palier à billes 114, par exemple sous l'effet d'un balourd. Le palier à rouleaux 116 est alors destiné à assurer la reprise des charges radiales provoquées par ce balourd, qui sont alors transmises par le support 120 au carter intermédiaire.

La bride 128 du carter intermédiaire est avantageusement frettée en C (figure 2) sur les nervures de renfort 154 du support 140, de façon à assurer une bonne transmission de ces charges radiales. La bride 128 du carter intermédiaire est ici située dans un plan transversal passant sensiblement par l'amortisseur 140 et le palier à rouleaux 116 (voir la ligne 170 de passage des efforts, schématiquement représentée par des traits pointillés), ce qui permet de transmettre efficacement les charges précitées directement sur le carter intermédiaire sans trop solliciter les pièces du dispositif. L'amortisseur 139 est destiné à amortir les vibrations auxquelles est soumis le palier à rouleaux 114 en fonctionnement.

## Revendications

1. Dispositif (110) de centrage et de guidage en rotation d'un arbre (112) de turbomachine, comprenant un palier à rouleaux (116) destiné à être monté autour de l'arbre et porté par un premier support annulaire (120), un palier à billes (114) destiné à être monté autour de l'arbre et porté par un second support annulaire (118), et un amortisseur (139) à compression de film d'huile agencé autour du palier à rouleaux et comportant un espace annulaire rempli d'huile et délimité par un support annulaire (140) rigide entourant une partie du support de palier à rouleaux, les supports de palier étant destinés à être fixés avec le support annulaire de l'amortisseur sur un carter et comportant chacun une partie annulaire (130, 138) élastiquement déformable, **caractérisé en ce que** le support du palier à billes, l'amortisseur, le support annulaire de l'amortisseur et le palier à rouleaux sont empilés transversalement et s'étendent les uns autour des autres.

2. Dispositif selon la revendication 1, **caractérisé en ce que** le support annulaire (140) de l'amortisseur a une forme sensiblement en L et comprend une partie cylindrique entourant le support de palier à rouleaux (120), et une partie radiale de fixation au carter.

3. Dispositif selon la revendication 1 ou 2, **caractérisé en ce que** la partie déformable (130, 138) de chaque support de palier (118, 120) comprend des fentes traversantes régulièrement réparties autour de l'axe du support et délimitant entre elles des languettes ou colonnettes (150, 152) élastiquement déformables.

4. Dispositif selon la revendication 3, **caractérisé en ce que** les languettes ou colonnettes (150) du support de palier à rouleaux (120) ont une forme sensiblement en C ou en épingle.

5. Dispositif selon la revendication 3 ou 4, **caractérisé en ce que** les languettes ou colonnettes (152) du support de palier à billes (118) sont sensiblement rectilignes et orientées longitudinalement.

6. Dispositif selon la revendication 5, **caractérisé en ce que** les languettes ou colonnettes (152) du support de palier à billes (118) ont au moins une extrémité de plus grande largeur leur conférant une forme sensiblement en T ou en I.

7. Dispositif selon l'une des revendications 3 à 6, **caractérisé en ce que** le support annulaire (140) de l'amortisseur comprend des nervures longitudinales (154) de renfort formées en saillie sur sa surface cylindrique externe et destinées, en position de montage, à être engagées dans les fentes du support de palier à billes (118).

8. Dispositif selon la revendication 7, **caractérisé en ce que** le support annulaire (140) de l'amortisseur comprend des moyens d'alimentation en huile de l'amortisseur, ces moyens comportant au moins un conduit (158) formé dans une des nervures de renfort (154) de ce support.

9. Dispositif selon la revendication 8, **caractérisé en ce que** le conduit est relié à un embout (162) de raccordement à des moyens d'amenée d'huile, cet embout étant formé en saillie sur une face radiale du support (140) de l'amortisseur et étant destiné, en position de montage, à être engagé dans une des fentes précitées du support de palier à rouleaux (120).

10. Dispositif selon l'une des revendications précédentes, **caractérisé en ce que** la partie du support de palier à rouleaux (120) agencée entre l'amortisseur (139) et le palier à rouleaux (116) a en section une forme en I et comprend une paroi cylindrique interne (142) formant la bague externe du palier à rouleaux et une paroi cylindrique externe (144) sur la surface externe de laquelle sont formées des gorges annulaires (148) de logement d'anneaux d'étanchéité de l'amortisseur.

11. Dispositif selon l'une des revendications précédentes, **caractérisé en ce que** le support (118) du palier à billes (114) est formé d'une seule pièce avec la bague externe (124) de ce palier.

12. Turbomachine, telle qu'un turboréacteur ou un turbopropulseur d'avion, comprenant au moins un dispositif (110) selon l'une des revendications précédentes, **caractérisée en ce que** les supports de palier (118, 120) et de l'amortisseur (140) sont fixés à une bride annulaire (128) d'un carter intermédiaire de la turbomachine, cette bride étant située dans un plan transversal passant sensiblement par l'amortisseur (139) et le palier à rouleaux (116)

13. Turbomachine selon la revendication 12, **caractérisée en ce que** la bride (128) du carter intermédiaire est frettée sur des nervures longitudinales (154) de renfort du support annulaire (140) de l'amortisseur.

## Patentansprüche

1. Vorrichtung (110) zur Zentrierung und Drehführung einer Welle (112) einer Turbomaschine bzw. eines Turbotriebwerks, enthaltend ein Rollenlager (116), das dazu bestimmt ist, um die Welle herum angebracht zu werden und von einem ersten ringförmigen Träger (120) getragen wird, ein Kugellager (114), das dazu bestimmt ist, um die Welle herum angebracht zu werden und von einem zweiten ringförmigen Träger (118) getragen wird, und eine Dämpfungseinrichtung (139) mit Ölfilmkompression, die um das Rollenlager herum angeordnet ist und einen ringförmigen Zwischenraum aufweist, der mit Öl gefällt ist und von einem ringförmigen, starren Träger (140) begrenzt wird, der einen Teil des Trägers des Rollenlagers umgibt, wobei die Lagerträger dazu bestimmt sind, mit dem ringförmigen Träger der Dämpfungseinrichtung an einem Gehäuse befestigt zu werden und jeweils einen elastisch verformbaren ringförmigen Abschnitt (130, 138) aufweisen, **dadurch gekennzeichnet, dass** der Träger des Kugellagers, die Dämpfungseinrichtung, der ringförmige Träger der Dämpfungseinrichtung und das Rollenlager in Querrichtung gestapelt sind und sich umeinander herum erstrecken.

2. Vorrichtung nach Anspruch 1, **dadurch gekennzeichnet, dass** der ringförmige Träger (140) der Dämpfungseinrichtung eine im Wesentlichen L-förmige Form hat und einen zylindrischen Abschnitt aufweist, der den Träger des Rollenlagers (120) umgibt, sowie einen radialen Abschnitt zum Befestigen am Gehäuse.

3. Vorrichtung nach Anspruch 1 oder 2, **dadurch gekennzeichnet, dass** der verformbare Abschnitt (130, 138) eines jeden Lagerträgers (118, 120) durchgehende Schlitze aufweist, die gleichmäßig um die Achse des Trägers verteilt sind und zwischen sich elastisch verformbare Zungen bzw. Stege (150, 152) eingrenzen.

4. Vorrichtung nach Anspruch 3, **dadurch gekennzeichnet, dass** die Zungen bzw. Stege (150) des Rollenlagerträgers (120) im Wesentlichen eine C- oder Klammerform haben.

5. Vorrichtung nach Anspruch 3 oder 4, **dadurch gekennzeichnet, dass** die Zungen bzw. Stege (152) des Kugellagerträgers (118) im Wesentlichen geradlinig verlaufen und längs ausgerichtet sind.

6. Vorrichtung nach Anspruch 5, **dadurch gekennzeichnet, dass** die Zungen bzw. Stege (152) des Kugellagerträgers (118) zumindest ein Ende mit größerer Breite aufweisen, das ihnen im Wesentlichen eine T- oder I-Form verleiht.

7. Vorrichtung nach einem der Ansprüche 3 bis 6, **dadurch gekennzeichnet, dass** der ringförmige Träger (140) der Dämpfungseinrichtung längs verlaufende Verstärkungsrippen (154) aufweist, die auf seiner zylindrischen Außenfläche vorspringend ausgebildet sind und dazu bestimmt sind, in Montagestellung in die Schlitze des Kugellagerträgers (118) einzugreifen.

8. Vorrichtung nach Anspruch 7, **dadurch gekennzeichnet, dass** der ringförmige Träger (140) der Dämpfungseinrichtung Versorgungseinrichtungen zum Versorgen der Dämpfungseinrichtung mit Öl aufweist, wobei diese Einrichtungen zumindest eine Leitung (158) aufweisen, die in einer der Verstärkungsrippen (154) dieses Trägers ausgebildet ist.

9. Vorrichtung nach Anspruch 8, **dadurch gekennzeichnet, dass** die Leitung mit einem Anschlussstück (162) zum Anschluss an Ölzuführeinrichtungen verbunden ist, wobei dieses Anschlussstück auf einer radialen Seite des Trägers (140) der Dämpfungseinrichtung vorspringend ausgebildet und dazu bestimmt ist, in Montagestellung in einen der vorgenannten Schlitze des Rollenlagerträgers (120) einzugreifen.

10. Vorrichtung nach einem der vorangehenden Ansprüche, **dadurch gekennzeichnet, dass** derjenige Abschnitt des Rollenlagerträgers (120), der zwischen der Dämpfungseinrichtung (139) und dem Rollenlager (116) angeordnet ist, einen I-förmigen Querschnitt hat und eine zylindrische Innenwand (142) hat, die den Außenring des Rollenlagers bildet, sowie eine zylindrische Außenwand (144), auf deren Außenfläche ringförmige Nuten (148) zum Aufnehmen von Dichtungsringen der Dämpfungseinrichtung ausgebildet sind.

11. Vorrichtung nach einem der vorangehenden Ansprüche, **dadurch gekennzeichnet, dass** der Träger (118) des Kugellagers (114) in einem Stück mit dem Außenring (124) dieses Lagers ausgebildet ist.

12. Turbomaschine bzw. Turbotriebwerk, wie etwa Turbostrahltriebwerk oder Turbopropellertriebwerk für Flugzeuge, enthaltend zumindest eine Vorrichtung (110) nach einem der vorangehenden Ansprüche, **dadurch gekennzeichnet, dass** die Lagerträger (118, 120) und die Dämpfungseinrichtung (140) an einen ringförmigen Flansch (128) eines Zwischengehäuses der Turbomaschine bzw. des Turbotriebwerks befestigt sind, wobei dieser Flansch in einer Querebene liegt, die im Wesentlichen durch die Dämpfungseinrichtung (139) und das Rollenlager (116) verläuft.

13. Turbomaschine bzw. Turbotriebwerk nach Anspruch 12, **dadurch gekennzeichnet, dass** der Flansch (128) des Zwischengehäuses an die längs verlaufenden Verstärkungsrippen (154) des ringförmigen Trägers (140) der Dämpfungseinrichtung aufgeschrumpft ist.

## Claims

1. A device (110) for centering and guiding rotation of a turbine engine shaft (112), the device comprising a roller bearing (116) for mounting around the shaft and carried by a first annular support (120), a ball bearing (114) for mounting around the shaft and carried by a second annular support (118), and an oil film compression damper (139) arranged around the roller bearing and including an oil-filled annular space defined by a rigid annular support (140) surrounding a portion of the roller bearing support, the bearing supports being designed to be fastened with the annular support of the damper to a casing, with each of them having an elastically deformable annular portion (130, 138), the device being **characterized in that** the ball bearing support, the annular support of the damper, and the roller bearing are stacked transversely, extending around one another.

2. A device according to claim 1, **characterized in that** the annular support (140) of the damper is substantially L-shaped and comprises a cylindrical portion surrounding the roller bearing support (120) and a radial portion for fastening to the casing.

3. A device according to claim 1 or claim 2, **characterized in that** the deformable portion (130, 138) of each bearing support (118, 120) includes through slots regularly distributed around the axis of the support, the slots defining elastically deformable columns or tongues (150, 152) between one another.

4. A device according to claim 3, **characterized in that** the columns or tongues (150) of the roller bearing support (120) are substantially C-shaped or substantially hairpin-shaped.

5. A device according to claim 3 or claim 4, **characterized in that** the columns or tongues (152) of the ball bearing support (118) are substantially rectilinear and longitudinally oriented.

6. A device according to claim 5, **characterized in that** the columns or tongues (152) of the ball bearing support (118) have at least one end of greater width, thereby making them substantially T-shaped or I-shaped.

7. A device according to any one of claims 3 to 6, **characterized in that** the annular support (140) of the damper includes longitudinal reinforcing splines (154) projecting from its outer cylindrical surface and designed, in the assembled position, to be engaged in slots of the ball bearing support (118).

8. A device according to claim 7, **characterized in that** the annular support (140) of the damper includes means for feeding the damper with oil, these means including at least one duct (158) formed in one of the reinforcing splines (154) of the support.

9. A device according to claim 8, **characterized in that** the duct is connected to an endpiece (162) for connection to oil delivery means, the endpiece projecting from a radial face of the support (140) of the damper and being designed, in the assembled position, to be engaged in one of the above-mentioned slots of the roller bearing support (120).

10. A device according to any preceding claim, **characterized in that** the portion of the roller bearing support (120) that is arranged between the damper (139) and the roller bearing (116) has an I-shaped section and includes an inner cylindrical wall (142) forming the outer ring of the roller bearing and an outer cylindrical wall (144) with annular grooves (148) formed in the outer surface thereof for housing sealing rings of the damper.

11. A device according to any preceding claim, **characterized in that** the support (118) of the ball bearing (114) is formed integrally with the outer ring (124) of the ball bearing.

12. A turbine engine, such as an airplane turboprop or turbojet, including at least one device (110) according to any preceding claim, the turbine engine being **characterized in that** the bearing supports (118, 120) and the damper (140) are fastened to an annular flange (128) of an intermediate casing of the turbine engine, this flange being situated in a transverse plane substantially containing the damper (139) and the roller bearing (116).

13. A turbine engine according to claim 12, **characterized in that** the flange (128) of the intermediate casing is an interference fit on longitudinal reinforcing splines (154) of the annular support (140) of the damper.
